# EUROPEAN PATENT APPLICATION

(11) **EP 4 841 723 A1**
(43) Date of publication of application: **18.11.2026**
(21) Application number: 24917177.8
(22) Date of filing: 10.01.2024
(51) Int. Cl.: H01M 10/04, H01M 4/02, H01M 4/13, H01M 4/66, H01M 10/0585, H01M 50/536, H01M 50/54

(54) **SECONDARY BATTERY**

(71) Applicant: TERAWATT TECHNOLOGY K.K., Yokohama-shi, Kanagawa 226-0026 (JP)
(72) Inventor: AKIMOTO, Yudai, Yokohama-shi, Kanagawa 226-0026 (JP); MIYAKE, Minoru, Yokohama-shi, Kanagawa 226-0026 (JP); OYAMA, Gosuke, Yokohama-shi, Kanagawa 226-0026 (JP)
(74) Representative: FRKelly
(86) International application number: PCT/JP2024/000248
(87) International publication number: WO 2025/150112

(57) **Abstract**

Provided is a technique for improving the usefulness of a lithium secondary battery. A secondary battery Ba according to an aspect of the present disclosure includes a first electrode sheet (clad electrode 1), and a second electrode sheet (single metal layer electrode 2) having a same polarity as the first electrode sheet (clad electrode 1), in which the first electrode sheet (clad electrode 1) includes a first current collector (clad current collector 10) that includes a resin layer 100 and a pair of metal layers 102a and 102b respectively provided on both surfaces of the resin layer 100 and has a first end portion (clad end portion 120) where the pair of metal layers 102a and 102b are exposed, the second electrode sheet (single metal layer electrode 2) includes a second current collector (single-layer current collector 20) that is configured to contain a metal, does not include the resin layer 100, and has a second end portion (single-layer end portion 220) where the metal is exposed, and the first end portion (clad end portion 120) and the second end portion (single-layer end portion 220) are stacked and bonded to each other.

## Description

### Technical Field

Exemplary embodiments of the present disclosure relate to a secondary battery.

### Background Art

In recent years, a technique of converting natural energy such as sunlight or wind power into electrical energy has attracted attention. In association with this, various secondary batteries have been developed as a power storage device which has high safety and is capable of storing a large amount of electrical energy.

Under such circumstances, it is known that a lithium secondary battery that carries out charge/discharge by moving lithium ions between a positive electrode and a negative electrode exhibits a high voltage and a high energy density. As a typical lithium secondary battery, a lithium ion secondary battery (LIB) in which a positive electrode and a negative electrode have an active material for holding a lithium element is known. In the lithium ion secondary battery, charge/discharge is performed by transferring lithium ions between a positive-electrode active material and a negative-electrode active material.

In addition, a current collector has been developed for the purpose of enhancing the safety of the lithium ion secondary battery. For example, Patent Literature 1 discloses a lithium ion secondary battery in which a positive electrode and a negative electrode are configured to prevent ignition during abnormal heat generation that occurs during overcharging or at a high temperature while maintaining the same level of electrical resistance as in the related art.

### Citation List

### Patent Literature

Patent Literature 1: Japanese Patent Application Laid-Open No. H11-102711

### Summary of Invention

### Technical Problem

The present disclosure provides a technique for improving the usefulness of a secondary battery.

### Solution to Problem

According to one exemplary embodiment of the present disclosure, there is provided a secondary battery including: a first electrode sheet; and a second electrode sheet having a same polarity as the first electrode sheet, in which the first electrode sheet includes a first current collector that includes a resin layer and a pair of metal layers respectively provided on both surfaces of the resin layer and has a first end portion where the pair of metal layers are exposed, the second electrode sheet includes a second current collector that is configured to contain a metal, does not include a resin layer, and has a second end portion where the metal is exposed, and the first end portion and the second end portion are stacked and bonded to each other.

### Advantageous Effect of Invention

According to one exemplary embodiment of the present disclosure, it is possible to provide a technique for improving the usefulness of a secondary battery.

### Brief Description of Drawings

[Figure 1] Figure 1 is a view for describing a configuration example of a clad electrode 1.
[Figure 2] Figure 2 is a view for describing a configuration example of a single metal layer electrode 2.
[Figure 3] Figure 3 is a view for describing a configuration example of a secondary battery Ba.
[Figure 4] Figure 4 is a view for describing a configuration example of a secondary battery Ba.
[Figure 5] Figure 5 is a view for describing a configuration example of a secondary battery Ba.
[Figure 6] Figure 6 is a view for describing a configuration example of a secondary battery Ba.
[Figure 7] Figure 7 is a reference view for describing an action of a joint mark w.

### Description of Embodiments

Hereinafter, each embodiment according to the present disclosure will be described.

In one exemplary embodiment, there is provided a secondary battery including a first electrode sheet, and a second electrode sheet having a same polarity as the first electrode sheet, in which the first electrode sheet includes a first current collector that includes a resin layer and a pair of metal layers respectively provided on both surfaces of the resin layer and has a first end portion where the pair of metal layers are exposed, the second electrode sheet includes a second current collector that is configured to contain a metal, does not include the resin layer, and has a second end portion where the metal is exposed, and the first end portion and the second end portion are stacked and bonded to each other.

In one exemplary embodiment, the first electrode sheet includes a first active material layer containing an active material, the first active material layer is provided on at least one surface of the first current collector, the second electrode sheet includes a second active material layer containing the active material, and the second active material layer is provided on at least one surface of the second current collector.

In one exemplary embodiment, a basis weight of the first active material layer of the first electrode sheet is less than a basis weight of the second active material layer of the second electrode sheet.

In one exemplary embodiment, an area of the first end portion is greater than an area of the second end portion.

In one exemplary embodiment, the first end portion and the second end portion include a joint mark that is recessed from one side toward the other side in a stacking direction.

In one exemplary embodiment, a thickness of a metal layer provided on the one side of the resin layer is greater than a thickness of a metal layer provided on the other side of the resin layer.

In one exemplary embodiment, the joint mark is a weld mark.

In one exemplary embodiment, the secondary battery includes a plurality of the first electrode sheets and a plurality of the second electrode sheets.

In one exemplary embodiment, one first end portion and one second end portion are stacked alternately with each other.

In one exemplary embodiment, a plurality of the second end portions are stacked between a plurality of the first end portions and a plurality of the first end portions.

In one exemplary embodiment, the number of the second electrode sheets is 1/4 or greater and 3/4 or less of the number of the first electrode sheets.

In one exemplary embodiment, the pair of metal layers each has a thickness of 0.3 µm or greater.

In one exemplary embodiment, the second current collector has a thickness of 4 µm or greater.

In one exemplary embodiment, the pair of metal layers each has a thickness of 1/30 or greater of a thickness of the second current collector.

In one exemplary embodiment, the pair of metal layers each has a thickness of 1/2 or less of a thickness of the second current collector.

In one exemplary embodiment, the first electrode sheet and the second electrode sheet are electrode sheets of a positive electrode.

In one exemplary embodiment, the pair of metal layers and the second current collector are configured to contain aluminum.

In one exemplary embodiment, the first electrode sheet and the second electrode sheet are electrode sheets of a negative electrode.

In one exemplary embodiment, the pair of metal layers and the second current collector are configured to contain copper.

In one exemplary embodiment, the first electrode sheet and the second electrode sheet are substantially free of a negative-electrode active material.

Hereinafter, each embodiment according to the present disclosure will be described in detail with reference to the drawings. Further, in each drawing, the same or similar elements are denoted by the same reference numerals, and redundant descriptions thereof will be omitted. Unless otherwise specified, positional relationships such as up, down, left, and right will be described based on the positional relationships illustrated in the drawings. The dimensional ratios in the drawings do not indicate the actual ratios, and the actual ratios are not limited to the ratios illustrated in the drawings.

In the present disclosure, the usefulness of the secondary battery includes at least some of the energy density, the safety, the financial cost required for manufacturing, the manufacturing efficiency, and the like of the secondary battery.

In addition, in the present disclosure, a secondary battery Ba will be described as a typical lithium ion secondary battery, but the present disclosure is also applicable to other types of secondary batteries.

### <1. Configuration Example of Clad Electrode 1 and Single Metal Layer Electrode 2>

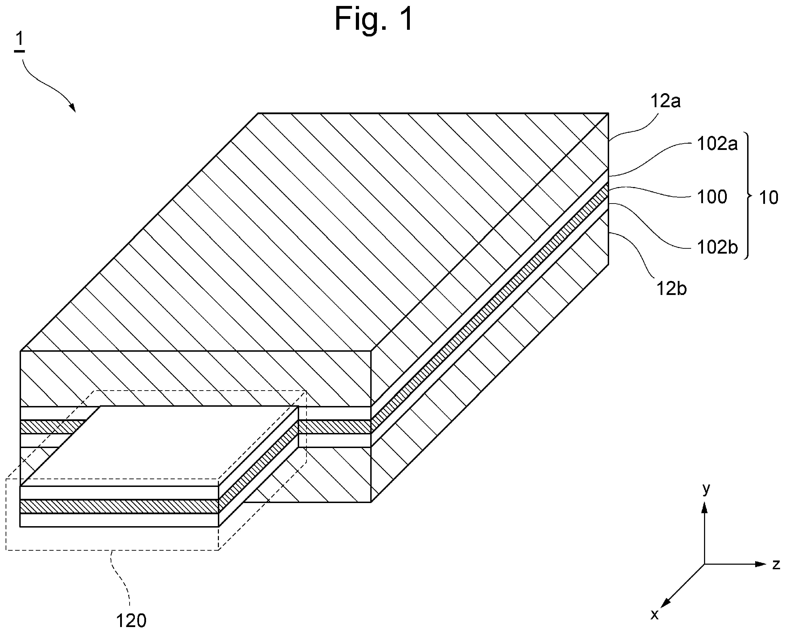

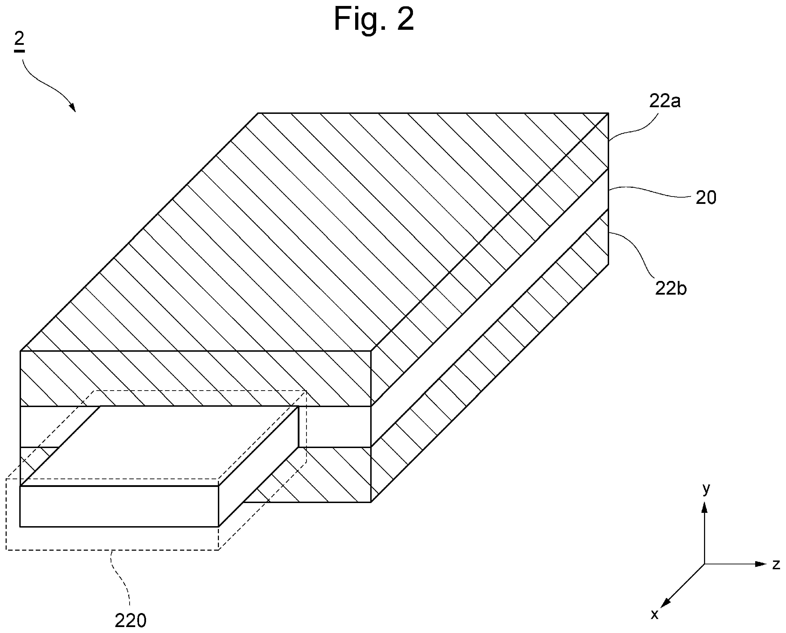

Figure 1 is a view for describing a configuration example of a clad electrode 1 according to the present disclosure. Figure 2 is a view for describing a configuration example of a single metal layer electrode 2.

### [Clad Electrode 1]

Figure 1 is a three-dimensional perspective view for describing a configuration example of the clad electrode 1. In one embodiment, the clad electrode 1 is a sheet-like electrode in an xz plane. The clad electrode 1 includes a clad current collector 10 and a pair of active material layers 12a and 12b.

### ~ Clad Current Collector 10 ~

The clad current collector 10 includes a resin layer 100 and a pair of metal layers 102a and 102b. In addition, a part of the clad current collector 10 is exposed from the pair of metal layers 102a and 102b as a clad end portion 120.

### (Resin layer 100)

The resin layer 100 may be formed of, for example, a sheet-like (film-like) or fibrous resin. The resin may be, for example, a thermoplastic resin such as polyethylene terephthalate (PET), polyethylene, polypropylene, polyamide, or polyvinyl chloride. The resin layer 100 may be formed by stacking at least one or more of a plurality of the resins. In one embodiment, the resin layer 100 is formed of a resin having a melting point of 130°C or higher and 300°C or lower. In one embodiment, the resin layer 100 may have an average thickness of 2 µm or greater and 15 µm or less, or 3 µm or greater and 10 µm or less.

### (Pair of Metal Layers 102a and 102b)

The pair of metal layers 102a and 102b are provided on both surfaces of the resin layer 100. Specifically, the metal layer 102a is provided on a surface of the resin layer 100 in a positive y-axis direction, and the metal layer 102b is provided on a surface of the resin layer 100 in a negative y-axis direction.

The pair of metal layers 102a and 102b are formed of a conductor that does not react with lithium ions or has sufficiently low reactivity. In one embodiment, the pair of metal layers 102a and 102b are formed of a common type of metal. In one embodiment, the pair of metal layers 102a and 102b are formed of at least one material selected from the group consisting of aluminum, copper, titanium, stainless steel, nickel, and alloys thereof. In one embodiment, the pair of metal layers 102a and 102b are formed by vapor-depositing, sputtering, electrolytically plating, or bonding the above-described material to a surface of the resin layer 100. In one embodiment, the pair of metal layers 102a and 102b each may have an average thickness of 0.3 µm or greater and 15 µm or less, 0.5 µm or greater and 12 µm or less, 2.0 µm or greater and 10 µm or less, or 3.0 µm or greater and 6.0 µm or less.

Further, in the present disclosure, the term "clad" is not limited to metals that are directly adhered (bonded) to each other, and also includes metals that are adhered (bonded) to each other with a resin layer provided therebetween, as in the clad current collector 10.

### (Clad End Portion 120)

The clad end portion 120 includes a portion of the clad current collector 10 where the pair of metal layers 102a and 102b are exposed. The clad end portion 120 may also be referred to as a portion of the clad current collector 10 where an active material is not provided. The clad end portion 120 is a part of the clad current collector 10, and includes the resin layer 100 and the pair of metal layers 102a and 102b provided on both surfaces of the resin layer 100, similarly to the clad current collector 10.

### ~ Pair of Active Material Layers 12a and 12b ~

The pair of active material layers 12a and 12b of the clad electrode 1 are provided on both surfaces of the clad current collector 10. Specifically, the active material layer 12a is provided on a surface of the clad current collector 10 in the positive y-axis direction, and the active material layer 12b is provided on a surface of the clad current collector 10 in the negative y-axis direction. In one embodiment, the pair of active material layers 12a and 12b of the clad electrode 1 are formed of a common composition. For example, when the active material layer 12a is formed of a positive-electrode active material, the active material layer 12b is also formed of a positive-electrode active material. In addition, when the active material layer 12a is formed of a negative-electrode active material, the active material layer 12b is also formed of a negative-electrode active material. The pair of active material layers 12a and 12b of the clad electrode 1 being provided on both surfaces of the clad current collector 10 may also indicate that the pair of active material layers 12a and 12b are applied to both surfaces of the clad current collector 10.

### [Single Metal Layer Electrode 2]

Figure 2 is a three-dimensional perspective view for describing a configuration example of the single metal layer electrode 2. The single metal layer electrode 2 is a sheet-like electrode in the xz plane. The single metal layer electrode 2 includes a single-layer current collector 20 and a pair of active material layers 22a and 22b.

### ~ Single-Layer Current Collector 20 ~

The single-layer current collector 20 is formed of a metal. The single-layer current collector 20 does not include a resin layer, which is different from the clad current collector 10 of the clad electrode 1. The single-layer current collector 20 is formed of a conductor that does not react with lithium ions or has sufficiently low reactivity, similarly to the pair of metal layers 102a and 102b of the clad electrode 1. In one embodiment, the single-layer current collector 20 is formed of at least one material selected from the group consisting of aluminum, copper, titanium, stainless steel, nickel, and alloys thereof. In one embodiment, the single-layer current collector 20 may have an average thickness of 4 µm or greater and 30 µm or less, 5 µm or greater and 25 µm or less, 7 µm or greater and 20 µm or less, or 10 µm or greater and 15 µm or less.

In one embodiment, the average thickness of the single-layer current collector 20 is 30 times or less the average thickness of each of the pair of metal layers 102a and 102b of the clad current collector 10. That is, in one embodiment, the average thickness of each of the pair of metal layers 102a and 102b of the clad current collector 10 is 1/30 or greater of the average thickness of the single-layer current collector 20.

In one embodiment, the average thickness of the single-layer current collector 20 is two times or greater than the average thickness of each of the pair of metal layers 102a and 102b of the clad current collector 10. That is, in one embodiment, the average thickness of each of the pair of metal layers 102a and 102b of the clad current collector 10 is 1/2 or less of the average thickness of the single-layer current collector 20.

In one embodiment, the average thickness of the single-layer current collector 20 is two times or greater and 30 times or less than the average thickness of each of the pair of metal layers 102a and 102b of the clad current collector 10. That is, in one embodiment, the average thickness of each of the pair of metal layers 102a and 102b of the clad current collector 10 is 1/30 or greater and 1/2 or less of the average thickness of the single-layer current collector 20.

### (Single-Layer End Portion 220)

The single-layer current collector 20 includes a single-layer end portion 220 where the metal is exposed. The single-layer end portion 220 may also be referred to as a portion of the single-layer current collector 20 where an active material is not provided. In one embodiment, the area of the surface of the single-layer end portion 220 parallel to an xz plane is smaller than the area of the surface of the clad end portion 120 parallel to the xz plane. That is, the area of the single-layer end portion 220 when viewed from the positive y-axis direction to the negative y-axis direction is smaller than the area of the clad end portion 120 when viewed from the positive y-axis direction to the negative y-axis direction.

### ~ Pair of Active Material Layers 22a and 22b ~

The pair of active material layers 22a and 22b included in the single metal layer electrode 2 are provided on both surfaces of the single-layer current collector 20. Specifically, the active material layer 22a is provided in the positive y-axis direction of the single-layer current collector 20, and the active material layer 22b is provided in the negative y-axis direction of the single-layer current collector 20. In one embodiment, the pair of active material layers 22a and 22b included in the single metal layer electrode 2 are formed of a common composition. For example, when the active material layer 22a is formed of a positive-electrode active material, the active material layer 22b is also formed of a positive-electrode active material. In addition, for example, when the active material layer 22a is formed of a negative-electrode active material, the active material layer 22b is also formed of a negative-electrode active material. The pair of active material layers 22a and 22b included in the single metal layer electrode 2 being provided on both surfaces of the single-layer current collector 20 may also indicate that the pair of active material layers 22a and 22b are applied to both surfaces of the single-layer current collector 20.

In one embodiment, the basis weight of the active material of the pair of active material layers 22a and 22b of the single metal layer electrode 2 is greater than the basis weight of the active material of the pair of active material layers 12a and 12b of the clad electrode 1. That is, the single metal layer electrode 2 may be provided with a larger amount of active material per unit area than the clad electrode 1.

### [Clad Positive Electrode 1p/Clad Negative Electrode 1n]

The above-described clad electrode 1 is used as any one of a positive electrode or a negative electrode by appropriately selecting the compositions of the pair of active material layers 12a and 12b and the types of metals of the pair of metal layers 102a and 102b of the clad current collector 10. Hereinafter, the clad electrode 1 as a positive electrode is referred to as "clad positive electrode 1p", and the clad electrode 1 as a negative electrode is referred to as "clad negative electrode 1n".

Specifically, in the clad electrode 1, the positive-electrode active material is used as the active material of the pair of active material layers 12a and 12b, and for example, aluminum or the like is used as the metal of the pair of metal layers 102a and 102b, whereby the clad electrode 1 may be used as the clad positive electrode 1p. Hereinafter, the pair of active material layers 12a and 12b containing the positive-electrode active material as the active material are referred to as "pair of positive-electrode active material layers 12pa and 12pb". In addition, hereinafter, the pair of metal layers 102a and 102b containing a metal for a positive electrode such as aluminum are referred to as "pair of positive electrode metal layers 102pa and 102pb". In addition, hereinafter, the clad current collector 10 composed of the resin layer 100 and the pair of positive electrode metal layers 102pa and 102pb is referred to as "clad positive electrode current collector 10p". In addition, hereinafter, a portion of the clad positive electrode current collector 10p corresponding to the clad end portion 120 is referred to as "clad positive electrode end portion 120p".

In addition, in the clad electrode 1, the negative-electrode active material is used as the active material of the pair of active material layers 12a and 12b, and for example, copper or the like is used as the metal of the pair of metal layers 102a and 102b, whereby the clad electrode 1 may be used as the clad negative electrode 1n. Hereinafter, the pair of active material layers 12a and 12b containing the negative-electrode active material as the active material are referred to as "pair of negative-electrode active material layers 12na and 12nb". In addition, hereinafter, the pair of metal layers 102a and 102b containing a metal for a negative electrode such as copper are referred to as "pair of negative electrode metal layers 102na and 102nb". Hereinafter, the clad current collector 10 composed of the resin layer 100 and the pair of negative electrode metal layers 102na and 102nb is referred to as "clad negative electrode current collector 10n". In addition, hereinafter, a portion of the clad negative electrode current collector 10n corresponding to the clad end portion 120 is referred to as "clad negative electrode end portion 120n".

### (Configuration Example of Pair of Positive-Electrode Active Material Layers 12pa and 12pb)

The positive-electrode active material is a material for holding the carrier metal in the electrode, and may also be referred to as a host material of the carrier metal. The positive-electrode active material may be a material for holding lithium ions in the electrode, and in this case, the positive-electrode active material is filled with and desorbed of lithium ions by charge/discharge of the battery. In this manner, the stability and the output voltage of the battery may be improved. In one embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO₄, LiCoPO₄, LiFeOF, LiNiOF, and LiTiS₂. The positive-electrode active material may be used alone or in combination of two or more kinds thereof. In one embodiment, the content of the positive-electrode active material in the positive-electrode active material layers 12pa and 12pb may be 50% by mass to 100% by mass with respect to the total amount of the positive-electrode active material layers 12pa and 12pb.

In one embodiment, at least one of the pair of positive-electrode active material layers 12pa and 12pb may contain one or more components other than the positive-electrode active material.

In one embodiment, at least one of the pair of positive-electrode active material layers 12pa and 12pb may contain a positive-electrode sacrificial material. The positive-electrode sacrificial material is a lithium-containing compound that causes an oxidation reaction in a charge/discharge potential range of the positive-electrode active material and substantially does not cause a reduction reaction.

In one embodiment, at least one of the pair of positive-electrode active material layers 12pa and 12pb may contain a gel electrolyte. The gel electrolyte may improve the adhesive force between the pair of positive-electrode active material layers 12pa and 12pb and the clad positive electrode current collector 10p. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, at least one of the pair of positive-electrode active material layers 12pa and 12pb may contain a conductive aid and/or a binder. In one example, the conductive aid is carbon black, a single-wall carbon nanotube (SWCNT), a multi-wall carbon nanotube (MWCNT), a carbon nanofiber (CNF), or the like. In one example, the binder is polyvinylidene fluoride, polytetrafluoroethylene, styrene-butadiene rubber, an acrylic resin, a polyimide resin, or the like. In one embodiment, the content of the conductive aid is 0.5% by mass to 30% by mass with respect to the total amount of the pair of positive-electrode active material layers 12pa and 12pb. In one embodiment, the content of the binder may be 0.5% by mass to 30% by mass with respect to the total amount of the pair of positive-electrode active material layers 12pa and 12pb.

In one embodiment, at least one of the pair of positive-electrode active material layers 12pa and 12pb may contain a polymer electrolyte. In one example, the polymer electrolyte is a solid polymer electrolyte mainly containing a polymer and an electrolyte, and a semi-solid polymer electrolyte mainly containing a polymer, an electrolyte, and a plasticizer. In one embodiment, the total content of the polymer electrolyte may be 0.5% by mass to 30% by mass with respect to the total amount of the pair of positive-electrode active material layers 12pa and 12pb.

### (Configuration Example of Pair of Negative-Electrode Active Material Layers 12na and 12nb)

The negative-electrode active material is a material that causes an electrode reaction, that is, an oxidation reaction and a reduction reaction in the negative electrode. The negative-electrode active material may be, for example, a lithium metal, an alloy containing a lithium metal, a carbon-based material, a metal oxide, a metal to be alloyed with lithium, an alloy containing the metal, or the like. The carbon-based material may be, for example, graphene, graphite, hard carbon, carbon nanotube, or the like. The metal oxide may be, for example, a titanium oxide-based compound, a cobalt oxide-based compound, or the like. The metal to be alloyed with lithium may be, for example, silicon, germanium, tin, lead, aluminum, and gallium.

In one embodiment, at least one of the pair of negative-electrode active material layers 12na and 12nb may contain a gel electrolyte. The gel electrolyte may improve the adhesive force between the pair of negative-electrode active material layers 12na and 12nb and the clad negative electrode current collector 10n. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, at least one of the pair of negative-electrode active material layers 12na and 12nb may contain a binder. In one example, the binder is polyvinylidene fluoride, polytetrafluoroethylene, styrene-butadiene rubber, an acrylic resin, a polyimide resin, or the like. In one embodiment, the content of the binder is 0.5% by mass to 30% by mass with respect to the total amount of the pair of negative-electrode active material layers 12na and 12nb. In one embodiment, the content of the binder may be 0.5% by mass to 30% by mass with respect to the total amount of the pair of negative-electrode active material layers 12na and 12nb.

In one embodiment, at least one of the pair of negative-electrode active material layers 12na and 12nb may contain a polymer electrolyte. In one example, the polymer electrolyte is a solid polymer electrolyte mainly containing a polymer and an electrolyte, and a semi-solid polymer electrolyte mainly containing a polymer, an electrolyte, and a plasticizer. In one embodiment, the total content of the polymer electrolyte may be 0.5% by mass to 30% by mass with respect to the total amount of the pair of negative-electrode active material layers 12na and 12nb.

### [Single Metal Layer Positive Electrode 2p/Single Metal Layer Negative Electrode 2n]

The above-described single metal layer electrode 2 is used as any one of a positive electrode or a negative electrode by appropriately selecting compositions of the pair of active material layers 22a and 22b and the type of metal constituting the single-layer current collector 20. Hereinafter, the single metal layer electrode 2 as a positive electrode is referred to as "single metal layer positive electrode 2p", and the single metal layer electrode 2 as a negative electrode is referred to as "single metal layer negative electrode 2n".

Specifically, in the single metal layer electrode 2, the positive-electrode active material is used as the active material of the pair of active material layers 22a and 22b, and for example, aluminum or the like is used as the metal constituting the single-layer current collector 20, whereby the single metal layer electrode 2 may be used as the single metal layer positive electrode 2p. Hereinafter, the pair of active material layers 22a and 22b containing the positive-electrode active material as the active material is referred to as "pair of positive-electrode active material layers 22pa and 22pb". In addition, hereinafter, the single-layer current collector 20 containing a metal for a positive electrode such as aluminum is referred to as "single-layer positive electrode current collector 20p". In addition, hereinafter, a portion of the single-layer positive electrode current collector 20p corresponding to the single-layer end portion 220 is referred to as "single-layer positive electrode end portion 220p".

In addition, in the single metal layer electrode 2, the negative-electrode active material is used as the active material of the pair of active material layers 22a and 22b, and for example, copper or the like is used as the metal constituting the single-layer current collector 20, whereby the single metal layer electrode 2 may be used as the single metal layer negative electrode 2n. Hereinafter, the pair of active material layers 22a and 22b containing the negative-electrode active material as the active material is referred to as "pair of negative-electrode active material layers 22na and 22nb". In addition, hereinafter, the single-layer current collector 20 containing a metal for a negative electrode such as copper is referred to as "single-layer negative electrode current collector 20n". In addition, hereinafter, a portion of the single-layer negative electrode current collector 20n corresponding to the single-layer end portion 220 is referred to as "single-layer negative electrode end portion 220n".

The pair of positive-electrode active material layers 22pa and 22pb of the single metal layer positive electrode 2p may have a common configuration with the pair of positive-electrode active material layers 12pa and 12pb of the clad positive electrode 1p. In addition, the pair of negative-electrode active material layers 22na and 22nb of the single metal layer negative electrode 2n may have a common configuration with the pair of negative-electrode active material layers 12na and 12nb of the clad negative electrode 1n.

### <2. Configuration Example of Secondary Battery Ba>

### [Stacking of Clad Electrode 1 and Single Metal Layer Electrode 2]

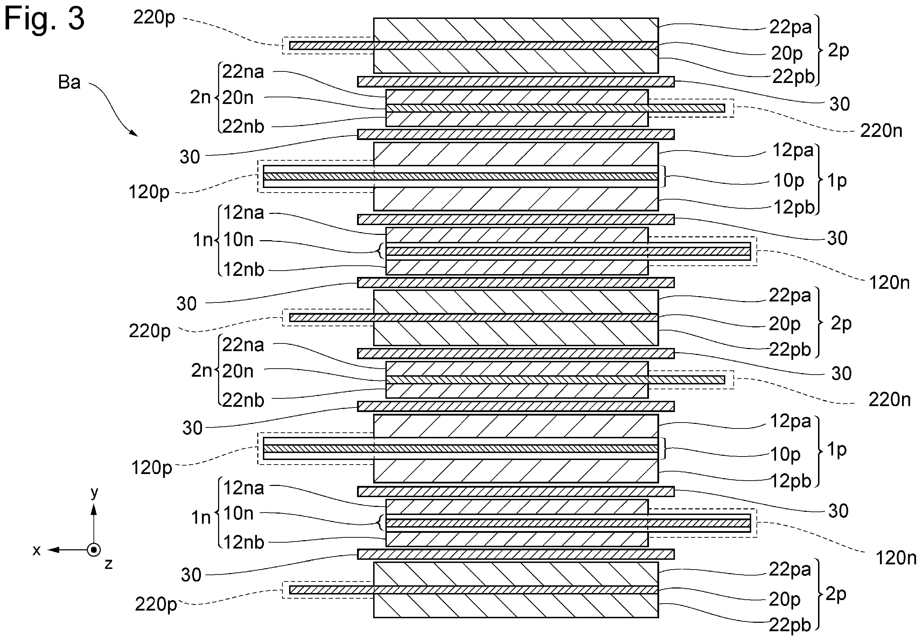

Figures 3 to 6 are views for describing configuration examples of the secondary battery Ba. Hereinafter, the configuration examples of the secondary battery Ba using the above-described clad electrode 1 and single metal layer electrode 2 will be described with reference to Figures 3 to 6.

Figure 3 is a view illustrating a cross-sectional view parallel to an xy plane when the secondary battery Ba is configured by stacking a plurality of the clad electrodes 1 and a plurality of the single metal layer electrodes 2. Specifically, the secondary battery Ba of Figure 3 is configured by periodically stacking (1) the single metal layer positive electrode 2p, (2) the single metal layer negative electrode 2n, (3) the clad positive electrode 1p, and (4) the clad negative electrode 1n in this order from the positive y-axis direction. Further, Figure 3 is a view illustrating a part of the stacking of the secondary battery Ba, and the number of each of the electrodes stacked may be equal to or more than the number illustrated in Figure 3. Hereinafter, the above-described items (1) to (4) will be described in order.
(1) First, the single metal layer positive electrode 2p is provided at an end of Figure 3 in the positive y-axis direction. The single metal layer positive electrode 2p is configured by stacking the positive-electrode active material layer 22pa, the single-layer positive electrode current collector 20p, and the positive-electrode active material layer 22pb in this order from the positive y-axis direction. Among these, the single-layer positive electrode current collector 20p includes a single-layer positive electrode end portion 220p extending in a positive x-axis direction.
(2) Next, the single metal layer negative electrode 2n is provided with a separator 30 interposed between the single metal layer positive electrode 2p of the above-described item (1) and the single metal layer negative electrode 2n. The single metal layer negative electrode 2n is configured by stacking the negative-electrode active material layer 22na, the single-layer negative electrode current collector 20n, and the negative-electrode active material layer 22nb in this order from the positive y-axis direction. Among these, the single-layer negative electrode current collector 20n includes a single-layer negative electrode end portion 220n extending in a negative x-axis direction (that is, a direction opposite to the single-layer positive electrode end portion 220p). Further, the separator 30 will be described below.
(3) Next, the clad positive electrode 1p is provided with the separator 30 interposed between the single metal layer negative electrode 2n of the above-described item (2) and the clad positive electrode 1p. The clad positive electrode 1p is configured by stacking the positive-electrode active material layer 12pa, the clad positive electrode current collector 10p, and the positive-electrode active material layer 12pb in this order from the positive y-axis direction. Among these, the clad positive electrode current collector 10p includes a clad positive electrode end portion 120p extending in the positive x-axis direction (that is, the same direction as the single-layer positive electrode end portion 220p).
(4) Next, the clad negative electrode 1n is provided with the separator 30 interposed between the clad positive electrode 1p of the above-described item (3) and the clad negative electrode 1n. The clad negative electrode 1n is configured by stacking the negative-electrode active material layer 12na, the clad negative electrode current collector 10n, and the negative-electrode active material layer 12nb in this order from the positive y-axis direction. Among these, the clad negative electrode current collector 10n includes a clad negative electrode end portion 120n extending in the negative x-axis direction (that is, the same direction as the single-layer negative electrode end portion 220n).

In one embodiment, the secondary battery Ba is configured by stacking the above-described items (1) to (4) a plurality of times as repeating units.

In one embodiment, the secondary battery Ba includes a number of the clad positive electrodes 1p that is equal to, one more than, or one less than the number of the single metal layer positive electrodes 2p. In one embodiment, the secondary battery Ba includes a number of the clad negative electrodes 1n that is equal to, one more than, or one less than the number of the single metal layer negative electrodes 2n.

### [Bonding of Clad End Portion 120 and Single-Layer End Portion 220]

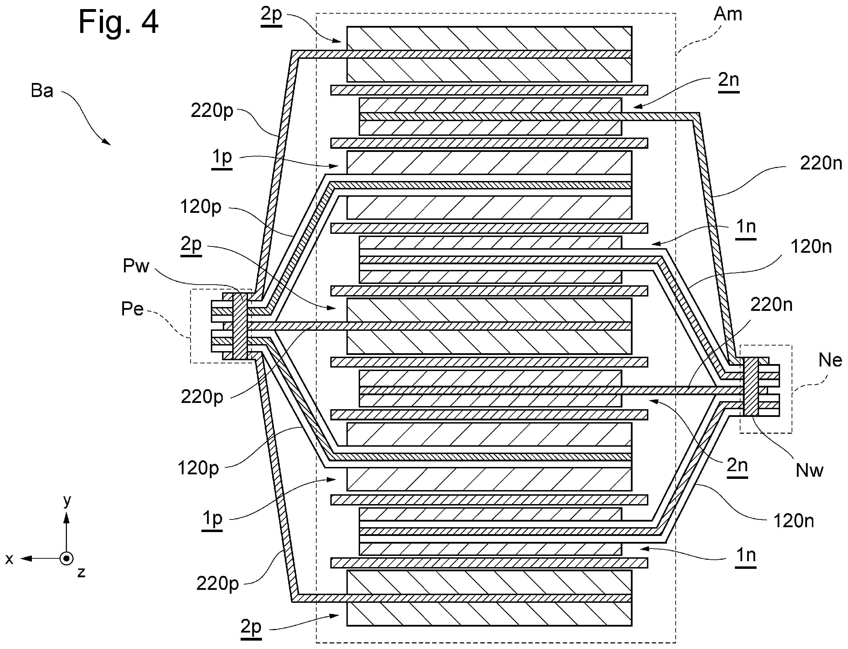

Figure 4 is a view illustrating a state in which, after the electrodes are stacked as illustrated in Figure 3, a plurality of the single-layer positive electrode end portions 220p and a plurality of the clad positive electrode end portions 120p are bonded to be electrically connected to each other, and a plurality of the single-layer negative electrode end portions 220n and a plurality of the clad negative electrode end portions 120n are bonded to be electrically connected to each other.

In one embodiment, a positive electrode joint mark Pw is formed at a site where the plurality of single-layer positive electrode end portions 220p and the plurality of clad positive electrode end portions 120p are bonded to each other. In addition, in one embodiment, a negative electrode joint mark Nw is formed at a site where the plurality of single-layer negative electrode end portions 220n and the plurality of clad negative electrode end portions 120n are bonded to each other. Hereinafter, when the positive electrode joint mark Pw and the negative electrode joint mark Nw are not particularly distinguished from each other, these are collectively referred to as "joint mark w".

In one embodiment, both the bonding of the plurality of single-layer positive electrode end portions 220p and the plurality of clad positive electrode end portions 120p and the bonding of the plurality of single-layer negative electrode end portions 220n and the plurality of clad negative electrode end portions 120n are performed by welding. That is, the joint mark w may be a weld mark. In one embodiment, the welding is performed by ultrasonic bonding.

Hereinafter, in the secondary battery Ba, a portion where the plurality of single-layer positive electrode end portions 220p and the plurality of clad positive electrode end portions 120p are stacked is referred to as "positive electrode end portion Pe". In addition, in the secondary battery Ba, a portion where the plurality of single-layer negative electrode end portions 220n and the plurality of clad negative electrode end portions 120n are stacked is referred to as "negative electrode end portion Ne". In addition, in the secondary battery Ba, a portion where the active material layer of each of the clad positive electrode 1p, the clad negative electrode 1n, the single metal layer positive electrode 2p, and the single metal layer negative electrode 2n, and the separator 30 are stacked (that is, a portion other than the positive electrode end portion Pe and the negative electrode end portion Ne) is referred to as "active material stacking region Am". The positive electrode end portion Pe includes the positive electrode joint mark Pw. In addition, the negative electrode end portion Ne includes the negative electrode joint mark Nw.

A user of the secondary battery Ba may perform charge/discharge of the secondary battery Ba via an electrode tab by bonding the electrode tab to each of the positive electrode end portion Pe and the negative electrode end portion Ne. Here, at least the active material stacking region Am may be stored in a housing (pouch).

In one embodiment, the single-layer positive electrode end portion 220p and the clad positive electrode end portion 120p are alternately stacked with each other at the positive electrode end portion Pe. Similarly, the single-layer negative electrode end portion 220n and the clad negative electrode end portion 120n are alternately stacked with each other at the negative electrode end portion Ne.

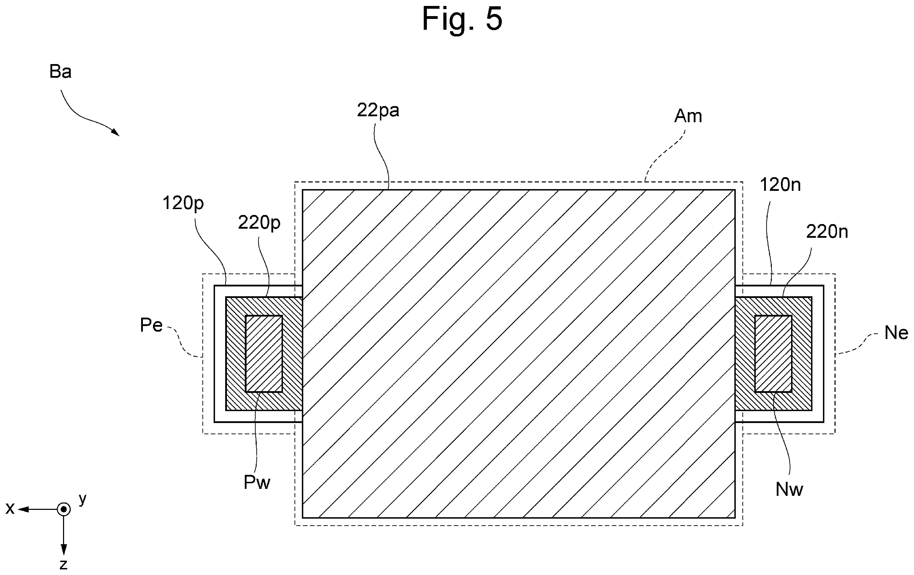

Figure 5 is a view of the secondary battery Ba of Figure 4 when viewed from the positive y-axis direction to the negative y-axis direction. In Figure 5, the positive electrode end portion Pe extends from the active material stacking region Am to the positive x-axis direction. In the positive electrode end portion Pe, the area when the single-layer positive electrode end portion 220p is viewed from the positive y-axis direction (that is, the front side of the paper surface) to the negative y-axis direction (that is, the back side of the paper surface) is smaller than the area when the clad positive electrode end portion 120p is viewed from the positive y-axis direction to the negative y-axis direction. In addition, in the positive electrode end portion Pe, the positive electrode joint mark Pw bonds the clad positive electrode end portion 120p and the single-layer positive electrode end portion 220p to penetrate from the positive y-axis direction to the negative y-axis direction.

In addition, in Figure 5, the negative electrode end portion Ne extends from the active material stacking region Am to the negative x-axis direction. In the negative electrode end portion Ne, the area when the single-layer negative electrode end portion 220n is viewed from the positive y-axis direction (that is, the front side of the paper surface) to the negative y-axis direction (that is, the back side of the paper surface) is smaller than the area when the clad negative electrode end portion 120n is viewed from the positive y-axis direction to the negative y-axis direction. In addition, in the negative electrode end portion Ne, the negative electrode joint mark Nw bonds the clad negative electrode end portion 120n and the single-layer negative electrode end portion 220n to penetrate from the positive y-axis direction to the negative y-axis direction.

### [Details of Joint Mark w]

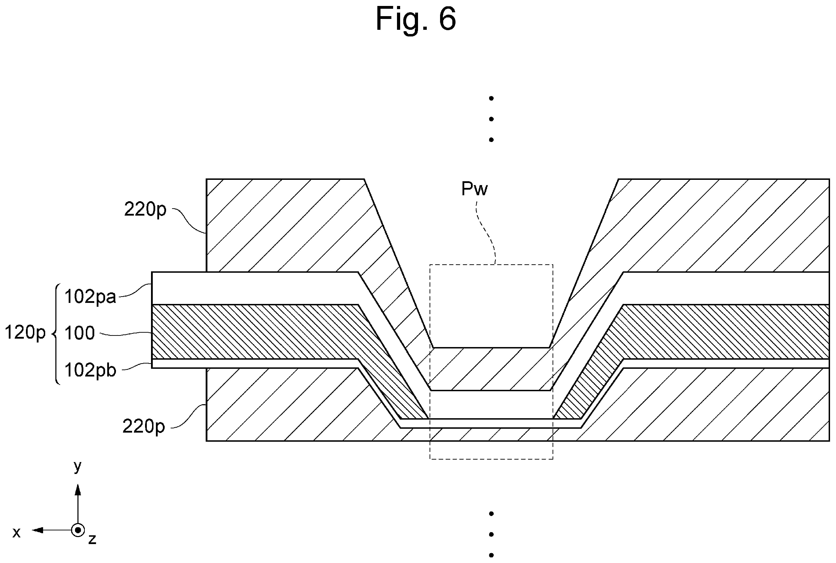

Figure 6 is an enlarged cross-sectional view focusing on two single-layer positive electrode end portions 220p and one clad positive electrode end portion 120p interposed therebetween in the positive electrode end portion Pe.

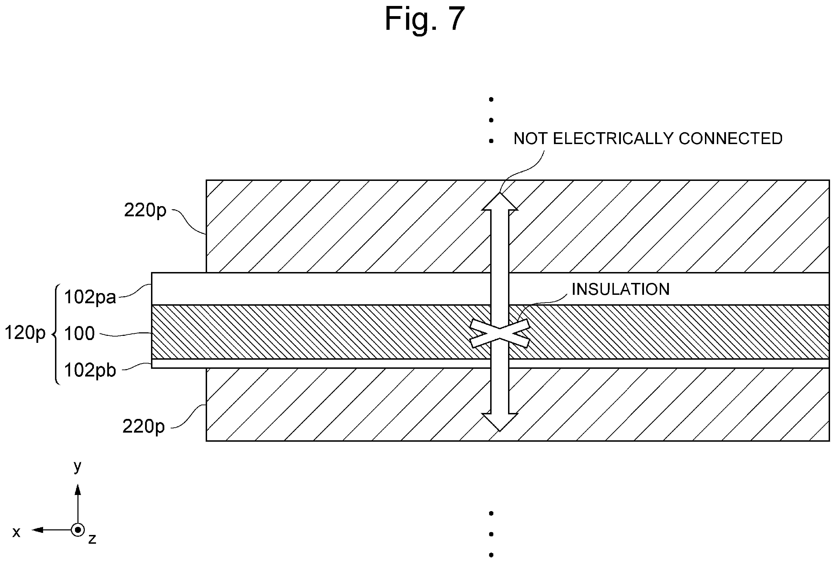

Meanwhile, as illustrated in Figure 7, since the resin layer 100 has insulating properties, at a time point when the plurality of single-layer positive electrode end portions 220p and the plurality of clad positive electrode end portions 120p are simply stacked, the single-layer positive electrode end portion 220p is not electrically connected to the other single-layer positive electrode end portions 220p provided with the clad positive electrode end portion 120p including the resin layer 100 interposed between the single-layer positive electrode end portions 220p.

On the other hand, the two single-layer positive electrode end portions 220p illustrated in Figure 6 are electrically connected to each other. This is because the resin layer 100 is removed from the entirety or at least a part of the positive electrode joint mark Pw by bonding the plurality of single-layer positive electrode end portions 220p and the plurality of clad positive electrode end portions 120p. For example, when the bonding is performed by welding, the resin layer 100 of the positive electrode joint mark Pw is pushed aside to other portions while being melted. In addition, when the bonding is performed by crimping, the resin layer 100 of the positive electrode joint mark Pw is pushed aside to other portions. By forming a site where no resin is present in the entirety or at least a part of the positive electrode joint mark Pw, the positive electrode metal layer 102pa and the positive electrode metal layer 102pb are electrically connected to each other. In this manner, the single-layer positive electrode end portion 220p in contact with the positive electrode metal layer 102pa and the single-layer positive electrode end portion 220p in contact with the positive electrode metal layer 102pb are also electrically connected to each other.

Figure 6 illustrates a state focusing on two single-layer positive electrode end portions 220p and one clad positive electrode end portion 120p, but the same applies even when three or more single-layer positive electrode end portions 220p and two or more clad positive electrode end portions 120p are stacked. That is, the plurality of single-layer positive electrode end portions 220p and the plurality of clad positive electrode end portions 120p in Figure 4 are electrically connected to each other at the positive electrode joint mark Pw. That is, the electrical connection of the entire positive electrode end portion Pe is realized through the positive electrode joint mark Pw.

In one embodiment, the thickness of the positive electrode metal layer 102pa provided on the surface in the positive y-axis direction with respect to the resin layer 100 and the thickness of the positive electrode metal layer 102pb provided on the surface in the negative y-axis direction with respect to the resin layer 100 are different from each other. Specifically, as illustrated in Figure 6, when the positive electrode joint mark Pw has a shape that is recessed from the positive y-axis direction to the negative y-axis direction, the thickness of the positive electrode metal layer 102pa is greater than the thickness of the positive electrode metal layer 102pb. That is, the positive electrode joint mark Pw may be formed to be recessed from the positive electrode metal layer 102pa having a large thickness toward the positive electrode metal layer 102pb having a small thickness. Such a positive electrode joint mark Pw is formed, for example, by providing an anvil on the surface in the negative y-axis direction and then applying a horn for ultrasonic bonding from the positive y-axis direction. Further, the positive electrode metal layer 102pb may also be deformed due to manufacturing reasons (for example, due to pressure applied by the anvil corresponding to the horn).

Further, Figure 6 merely illustrates a conceptual view, and in practice, the single-layer positive electrode end portion 220p and the clad positive electrode end portion 120p are integrated at the positive electrode joint mark Pw, and the layers may be difficult to distinguish from each other as illustrated in Figure 6.

In Figure 6, the positive electrode end portion Pe including the positive electrode joint mark Pw has been described, but the negative electrode end portion Ne including the negative electrode joint mark Nw may also have the same configuration.

### <3. Effects>

The secondary battery Ba according to one aspect of the present disclosure includes the clad electrode 1 and the single metal layer electrode 2 having the same polarity as the clad electrode 1, and has the following configurations (1) to (3).
(1) The clad electrode 1 includes the clad current collector 10 including the resin layer 100 and the pair of metal layers 102a and 102b provided on both surfaces of the resin layer 100, respectively. The clad current collector 10 has a clad end portion 120 where the pair of metal layers 102a and 102b are exposed.
(2) The single metal layer electrode 2 includes the single-layer current collector 20 that is configured to contain a metal and does not include the resin layer 100. The single-layer current collector 20 has a single-layer end portion 220 where the metal is exposed.
(3) The clad end portion 120 and the single-layer end portion 220 are stacked and bonded to each other.

If the secondary battery Ba is configured by stacking the clad electrodes 1 without using the single metal layer electrode 2 and bonding the clad end portions 120 of each of the plurality of clad electrodes 1, the resistance value at the joint mark w (that is, a portion where the plurality of clad electrodes 1 are electrically connected to each other) may increase. This is because the joint mark w contains a relatively large amount of components of the resin layer 100 having insulating properties. Since an electrode tab inputs and outputs power to and from the secondary battery Ba through the joint mark w, the efficiency of charge/discharge of the secondary battery Ba may decrease due to an increase in the resistance value at the joint mark w.

On the other hand, if the secondary battery Ba is configured by stacking the single metal layer electrodes 2 without using the clad electrode 1 and bonding the single-layer end portions 220 of each of the plurality of single metal layer electrodes 2, the safety of the secondary battery Ba may decrease. This is because, when the secondary battery Ba generates abnormal heat due to overcharge or the like, it is not possible to suppress ignition or the like (see Patent Literature 1).

According to the secondary battery Ba of the present disclosure, it is possible to achieve both the safety of the secondary battery Ba and the efficiency of charge/discharge. The secondary battery Ba includes the clad electrode 1 and the single metal layer electrode 2, and the clad end portion 120 of the clad electrode 1 and the single-layer end portion 220 of the single metal layer electrode 2 are bonded to each other. In this manner, the components of the resin layer 100 that are included in the joint mark w are reduced as compared with when the single metal layer electrode 2 is not used, and thus the resistance value of the joint mark w may decrease. In addition, when the secondary battery Ba generates abnormal heat, the resin layer 100 of the clad electrode 1 melts, and thus the clad electrode 1 is damaged. Therefore, the current inside the battery is cut off, and ignition or the like of the battery may be suppressed. As a result, both the safety of the secondary battery Ba and the efficiency of charge/discharge are achieved.

In one embodiment, the clad electrode 1 includes the active material layers 12a and 12b containing an active material, the active material layers 12a and 12b are provided on at least one surface of the clad current collector 10, the single metal layer electrode 2 includes the active material layers 22a and 22b containing an active material, and the active material layers 22a and 22b are provided on at least one surface of the single-layer current collector 20. In addition, in one embodiment, the basis weights of the active material layers 12a and 12b of the clad electrode 1 are less than the basis weights of the active material layers 22a and 22b of the single metal layer electrode 2. In addition, in one embodiment, the area of the clad end portion 120 is greater than the area of the single-layer end portion 220.

Since the clad electrode 1 includes the resin layer 100, when the basis weights of the active materials of the active material layers 12a and 12b of the clad electrode 1 and the active material layers 22a and 22b of the single metal layer electrode 2 are the same as each other and when the areas of the clad end portion 120 of the clad electrode 1 and the single-layer end portion 220 of the single metal layer electrode 2 are the same as each other, the resistance value of the clad electrode 1 is greater than the resistance value of the single metal layer electrode 2. A difference in resistance value between the clad electrode 1 and the single metal layer electrode 2 causes a decrease in energy density of the secondary battery Ba. According to these configurations, the resistance values of the clad electrode 1 and the single metal layer electrode 2 may be made uniform. In this manner, the energy density of the secondary battery Ba may be improved.

In one embodiment, the clad end portion 120 and the single-layer end portion 220 include the joint mark w that is recessed from one side toward the other side in the stacking direction. Further, in one embodiment, the thickness of the metal layer 102a provided on the one side of the resin layer 100 is greater than the thickness of the metal layer 102b provided on the other side of the resin layer 100.

The joint mark w recessed from one side toward the other side is formed by applying a force from the one side toward the other side. Here, the metal layer on the side applying the force (that is, the metal layer 102a on the one side) tends to be easily peeled from the other metal layer as compared with the metal layer on the side where the force is applied (that is, the metal layer 102b on the other side). According to this configuration, the metal layer on the side applying the force contains a larger amount of metals, and thus is strongly bonded to the single-layer end portion 220, and accordingly, the peeling from the other metal layer is suppressed.

In one embodiment, the joint mark w is a weld mark. According to this configuration, the resistance value at the joint mark w may be reduced, and thus the efficiency of charge/discharge of the secondary battery Ba may be improved.

In one embodiment, the secondary battery Ba includes a plurality of the clad electrodes 1 and a plurality of the single metal layer electrodes 2. According to this configuration, the energy density of the secondary battery Ba may be improved.

In one embodiment, one clad end portion 120 and one single-layer end portion 220 are alternately stacked with each other. According to this configuration, both the safety of the secondary battery Ba and the efficiency of charge/discharge are likely to be achieved.

In one embodiment, the pair of metal layers 102a and 102b each has a thickness of 0.3 µm or greater. In one embodiment, the single-layer current collector 20 has a thickness of 4 µm or greater. In one embodiment, the thickness of each of the pair of metal layers 102a and 102b is 1/30 or greater of the thickness of the single-layer current collector 20. In one embodiment, the thickness of each of the pair of metal layers 102a and 102b is 1/2 or less of the thickness of the single-layer current collector 20. According to these parameters, both the safety of the secondary battery Ba and the efficiency of charge/discharge are likely to be achieved.

### <4. Method of Using Secondary Battery>

The secondary battery Ba performs charge/discharge by further connecting an electrode tab for a positive electrode connected to the positive electrode end portion Pe to one end of an external circuit and further connecting an electrode tab for a negative electrode connected to the negative electrode end portion Ne to the other end of the external circuit. The external circuit may be, for example, a resistor, a power supply, an apparatus, a device, another battery, or a potentiostat.

When a voltage is applied between the electrode tab for a positive electrode and the electrode tab for a negative electrode to allow the current to flow from the electrode tab for a negative electrode to the electrode tab for a positive electrode through an external circuit, the secondary battery Ba is charged. When the electrode tab for a positive electrode and the electrode tab for a negative electrode are connected to each other through a desired external circuit in the secondary battery Ba after charging, the secondary battery Ba is discharged.

### <5. Other Configurations>

The secondary battery Ba may further include the following configuration.

### [Electrolyte Solution]

In one embodiment, the secondary battery Ba may contain an electrolyte solution. The electrolyte solution is a liquid containing a solvent and an electrolyte, and has ion conductivity. The electrolyte solution may be referred to as a liquid electrolyte, and acts as a conduction path for lithium ions. Therefore, when the secondary battery Ba has an electrolyte solution, the internal resistance is reduced, and the energy density, the capacity, and the cycle characteristics may be improved.

The electrolyte solution may be, for example, a solution that fills the housing (pouch) of the secondary battery Ba. In addition, for example, the electrolyte solution may be infiltrated into the separator 30, and may constitute a polymer electrolyte or a gel electrolyte by being held in a polymer.

The electrolyte contained in the electrolyte solution may be, for example, a lithium salt. The lithium salt may be, for example, one or a combination of two or more kinds selected from the group consisting of LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, Li₂SO₄, and LiFSI.

The solvent contained in the electrolyte solution may be, for example, a non-aqueous solvent having a fluorine atom (hereinafter, referred to as "fluorinated solvent") and a non-aqueous solvent having no fluorine atom (hereinafter, referred to as "non-fluorinated solvent").

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, or 1H,1H,5H-octafluoropentyl-1,1,2,2-tetrafluoroethyl ether.

The non-fluorinated solvent may be, for example, triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

The fluorinated solvent and/or the non-fluorinated solvent may be used alone or in a combination of two or more types thereof at any ratio. The contents of the fluorinated solvent and the non-fluorinated solvent are not particularly limited, and the proportion of the fluorinated solvent to the entire solvent may be 0% to 100% by volume, and the proportion of the non-fluorinated solvent to the entire solvent may be 0% to 100% by volume.

### [Separator 30]

The separator 30 physically and/or electrically isolates the clad positive electrode 1p and/or the single metal layer positive electrode 2p from the clad negative electrode 1n and/or the single metal layer negative electrode 2n, and ensures the ion conductivity of lithium ions. In one embodiment, the separator 30 may be at least one selected from the group consisting of an insulating porous member, a polymer electrolyte, a gel electrolyte, and an inorganic solid electrolyte. As the separator 30, one kind of member may be used alone, or two or more kinds of members may be used in combination.

When the separator 30 includes an insulating porous member, the pores of the porous member are filled with a material having ion conductivity (an electrolyte solution, a polymer electrolyte, and/or a gel electrolyte, or the like). In this manner, the separator 30 exhibits ion conductivity. The material constituting the insulating porous member is not particularly limited, and examples thereof include an insulating polymer material. Specific examples thereof include polyethylene (PE) and polypropylene (PP). That is, the separator 30 may be a porous polyethylene (PE) film, a porous polypropylene (PP) film, or a stacked structure thereof.

In one embodiment, one surface or both surfaces of the separator 30 may be coated with a separator coating layer. In this manner, the cycle characteristics of the secondary battery Ba may be improved. In one embodiment, the separator coating layer may be a continuous film having a uniform thickness in an area of 50% or greater of the surface of the separator 30. In one embodiment, the separator coating layer may include a binder such as polyvinylidene fluoride (PVDF), a composite material of styrene-butadiene rubber and carboxymethyl cellulose (SBR-CMC), or polyacrylic acid (PAA). In one embodiment, the separator coating layer may be configured by adding inorganic particles such as silica, alumina, titania, zirconia, or magnesium hydroxide to the above-described binder.

In one embodiment, the separator 30 may have an average thickness (including the coating layer when the separator 30 includes the coating layer) of 3.0 µm or greater and 40 µm or less. In this manner, the volume occupied by the separator 30 may be reduced while isolating the clad positive electrode 1p and/or the single metal layer positive electrode 2p from the clad negative electrode 1n and/or the single metal layer negative electrode 2n. In one embodiment, the separator 30 may have an average thickness of 5.0 µm or greater and 30 µm or less, 7.0 µm or greater and 10 µm or less, or 10 µm or greater and 20 µm or less.

### <6. Modification Example>

### [Modification Example Relating to Clad Negative Electrode 1n/Single Metal Layer Negative Electrode 2n]

In the above-described embodiment, the clad negative electrode 1n has been described as including the negative-electrode active material layers 12na and 12nb, and the single metal layer electrode 2 has been described as including the negative-electrode active material layers 22na and 22nb, but the present disclosure is not limited thereto. The clad negative electrode 1n and/or the single metal layer negative electrode 2n may be substantially free of a negative-electrode active material.

In one embodiment, the clad negative electrode 1n and/or the single metal layer negative electrode 2n do not have a negative-electrode active material before the initial charge of the battery (a state from when the battery is assembled until the first charge is performed). In the secondary battery Ba, after the initial charge, the lithium metal may be deposited on the negative electrode, and the deposited lithium metal may be electrolytically dissolved to perform charge/discharge. In this case, the volume and mass occupied by the negative-electrode active material are suppressed, the volume and mass of the entire battery are reduced, and the energy density is increased in principle. Further, the expression "lithium metal is deposited on the negative electrode" includes not only the deposition of the lithium metal on the surface of the negative electrode but also the deposition of the lithium metal on a surface of a solid electrolyte interface (SEI) layer described below or a surface or inside of a buffer functional layer.

In one embodiment, the negative-electrode active material deposited on the clad negative electrode 1n and/or the single metal layer negative electrode 2n at the end of discharge (for example, a state where the open circuit voltage of the battery is 2.5 V or greater and 3.6 V or less) has a layer thickness of 25 µm or less. In one embodiment, the negative-electrode active material at the end of discharge may have a layer thickness of 20 µm or less, 15 µm or less, 10 µm or less, 5 µm or less, or 0 µm. Since the clad negative electrode 1n and/or the single metal layer negative electrode 2n do not substantially have a negative-electrode active material, the volumetric energy density as well as the gravimetric energy density may be improved. Further, in this case, the secondary battery Ba may also be referred to as "anode-free lithium battery", "zero-anode lithium battery", or "anodeless lithium battery".

In one embodiment, when the mass of the lithium metal deposited on the negative electrode in a state where the voltage is 4.2 V is defined as M_{4.2} and the corresponding mass of the lithium metal in a state where the voltage is 3.0 V is defined as M_{3.0}, M_{3.0}/M_{4.2} may be 40% or less or 35% or less. In one embodiment, the ratio M_{3.0}/M_{4.2} may be 1.0% or greater, 2.0% or greater, 3.0% or greater, or 4.0% or greater.

### [Modification Example Relating to Method of Stacking Clad Electrode 1 and Single Metal Layer Electrode 2]

### ~ Difference in Number of Clad Electrodes 1 and Single Metal Layer Electrodes 2 ~

In the above-described embodiment, an example in which the secondary battery Ba is configured by stacking substantially the same number of the single metal layer electrodes 2 as the clad electrodes 1 has been described, but the present disclosure is not limited thereto. Specifically, the secondary battery Ba may be configured by stacking the clad positive electrodes 1p in a range of 1/4 or greater and 3/4 or less with respect to the number of the single metal layer positive electrodes 2p. In addition, the secondary battery Ba may be configured by stacking the clad negative electrodes 1n in a range of 1/4 or greater and 3/4 or less with respect to the number of the single metal layer negative electrodes 2n. According to this configuration, it is possible to meet various performance requirements while achieving both the safety of the secondary battery Ba and the efficiency of charge/discharge.

In the above-described embodiment, an example in which the clad end portion 120 and the single-layer end portion 220 are alternately stacked has been described, but the present disclosure is not limited thereto. The secondary battery Ba may be configured by stacking the plurality of single-layer end portions 220 between the clad end portion 120 and the other clad end portion 120. Further, the clad end portion 120 may not be stacked between the plurality of single-layer end portions 220. That is, the plurality of single-layer end portions 220 may be continuously stacked. The secondary battery Ba may be configured by stacking, for example, the following item (1) or (2).
(1) Two pairs of the single metal layer positive electrode 2p and the single metal layer negative electrode 2n and one pair of the clad positive electrode 1p and the clad negative electrode 1n are periodically stacked. That is, the single metal layer positive electrode 2p, the single metal layer negative electrode 2n, the single metal layer positive electrode 2p, the single metal layer negative electrode 2n, the clad positive electrode 1p, and the clad negative electrode 1n are periodically stacked in this order.

In this case, when the single-layer positive electrode end portion 220p of the single metal layer positive electrode 2p and the clad positive electrode end portion 120p of the clad positive electrode 1p extend to one side, and the single-layer negative electrode end portion 220n of the single metal layer negative electrode 2n and the clad negative electrode end portion 120n of the clad negative electrode 1n extend to the other side, two single-layer positive electrode end portions 220p are stacked between the clad positive electrode end portion 120p and the other clad positive electrode end portion 120p on the one side. In addition, two single-layer negative electrode end portions 220n are stacked between the clad negative electrode end portion 120n and the other clad negative electrode end portion 120n on the other side.

(2) Three pairs of the single metal layer positive electrode 2p and the single metal layer negative electrode 2n and one pair of the clad positive electrode 1p and the clad negative electrode 1n are periodically stacked. That is, the single metal layer positive electrode 2p, the single metal layer negative electrode 2n, the single metal layer positive electrode 2p, the single metal layer negative electrode 2n, the single metal layer positive electrode 2p, the single metal layer negative electrode 2n, the clad positive electrode 1p, and the clad negative electrode 1n are periodically stacked in this order.

In this case, when the single-layer positive electrode end portion 220p of the single metal layer positive electrode 2p and the clad positive electrode end portion 120p of the clad positive electrode 1p extend to one side, and the single-layer negative electrode end portion 220n of the single metal layer negative electrode 2n and the clad negative electrode end portion 120n of the clad negative electrode 1n extend to the other side, three single-layer positive electrode end portions 220p are stacked between the clad positive electrode end portion 120p and the other clad positive electrode end portion 120p on the one side. In addition, three single-layer negative electrode end portions 220n are stacked between the clad negative electrode end portion 120n and the other clad negative electrode end portion 120n on the other side.

Similarly, the secondary battery Ba may be configured by stacking the plurality of clad end portions 120 between the single-layer end portion 220 and the other single-layer end portion 220. The single-layer end portion 220 may not be stacked between the plurality of clad end portions 120. That is, the plurality of clad end portions 120 may be continuously stacked.

### ~ Stacking of Clad Electrode 1 and Single Metal Layer Electrode 2 as Pair ~

In the above-described embodiment, an example in which the clad positive electrode 1p and the clad negative electrode 1n, and the single metal layer positive electrode 2p and the single metal layer negative electrode 2n are each stacked as pairs has been mainly described, but the present disclosure is not limited thereto. The secondary battery Ba may be configured by stacking the clad positive electrode 1p and the single metal layer negative electrode 2n, and the clad negative electrode 1n and the single metal layer positive electrode 2p as pairs. For example, three pairs of the clad positive electrode 1p and the single metal layer negative electrode 2n and one pair of the single metal layer positive electrode 2p and the clad negative electrode 1n may be stacked instead of periodically stacking three pairs of the single metal layer positive electrode 2p and the single metal layer negative electrode 2n and one pair of the clad positive electrode 1p and the clad negative electrode 1n.

### ~ Plurality of Stacked Configurations ~

In the above-described embodiment, an example in which the secondary battery Ba has a common stacked configuration throughout has been mainly described. In the present disclosure, the term "stacked configuration" indicates an aspect of stacking of the clad electrode 1 and the single metal layer electrode 2, and includes, for example, the respective numbers of the clad electrodes 1 and the single metal layer electrodes 2, the stacking order, and the repetition period. For example, in Figure 3 of the above-described embodiment, an example in which the secondary battery Ba has a stacked configuration in which the single metal layer positive electrode 2p, the single metal layer negative electrode 2n, the clad positive electrode 1p, and the clad negative electrode 1n are periodically stacked in order has been described. On the other hand, the secondary battery Ba may have a portion having a first stacked configuration and a portion having a second stacked configuration. The secondary battery Ba may have, for example, any of the following stacked configurations (1) and (2).
(1) A portion having a first stacked configuration in which one pair of the single metal layer positive electrode 2p and the single metal layer negative electrode 2n and one pair of the clad positive electrode 1p and the clad negative electrode 1n are periodically stacked.
(2) A portion having a second stacked configuration in which four pairs of the single metal layer positive electrode 2p and the single metal layer negative electrode 2n and one pair of the clad positive electrode 1p and the clad negative electrode 1n are periodically stacked.

In this case, the portion having the second stacked configuration may be provided between the portion having the first stacked configuration and another portion having the first stacked configuration. The secondary battery Ba may have, for example, the following portions (1) to (3) in order according to the stacking direction.
(1) A portion having the first stacked configuration in which one pair of the single metal layer positive electrode 2p and the single metal layer negative electrode 2n and one pair of the clad positive electrode 1p and the clad negative electrode 1n are periodically stacked.
(2) A portion having the second stacked configuration in which four pairs of the single metal layer positive electrode 2p and the single metal layer negative electrode 2n and one pair of the clad positive electrode 1p and the clad negative electrode 1n are periodically stacked.
(3) A portion having the first stacked configuration in which one pair of the single metal layer positive electrode 2p and the single metal layer negative electrode 2n and one pair of the clad positive electrode 1p and the clad negative electrode 1n are periodically stacked.

### <7. Embodiment of Present Disclosure>

The embodiment according to the present disclosure further includes the following aspects. Further, the correspondence relationship with the terms in the above-described embodiment is shown in parentheses.

### [Appendix 1]

A secondary battery Ba including: a first electrode sheet (clad electrode 1) and a second electrode sheet (single metal layer electrode 2) having a same polarity as the first electrode sheet (clad electrode 1), in which the first electrode sheet (clad electrode 1) includes a first current collector (clad current collector 10) that includes a resin layer 100 and a pair of metal layers 102a and 102b respectively provided on both surfaces of the resin layer 100 and has a first end portion (clad end portion 120) where the pair of metal layers 102a and 102b are exposed, the second electrode sheet (single metal layer electrode 2) includes a second current collector (single-layer current collector 20) that is configured to contain a metal, does not include the resin layer 100, and has a second end portion (single-layer end portion 220) where the metal is exposed, and the first end portion (clad end portion 120) and the second end portion (single-layer end portion 220) are stacked and bonded to each other.

### [Appendix 2]

The secondary battery Ba according to Appendix 1, in which the first electrode sheet (clad electrode 1) includes a first active material layer (active material layers 12a and 12b) containing an active material, the first active material layer (active material layer 12a and 12b) is provided on at least one surface of the first current collector (clad current collector 10),
the second electrode sheet (single metal layer electrode 2) includes a second active material layer (active material layers 22a and 22b) containing the active material, and the second active material layer (active material layers 22a and 22b) is provided on at least one surface of the second current collector (single-layer current collector 20).

### [Appendix 3]

The secondary battery Ba according to Appendix 2, in which a basis weight of the first active material layer (active material layers 12a and 12b) of the first electrode sheet (clad electrode 1) is less than a basis weight of the second active material layer (active material layers 22a and 22b) of the second electrode sheet (single metal layer electrode 2).

### [Appendix 4]

The secondary battery Ba according to any one of Appendices 1 to 3, in which an area of the first end portion (clad end portion 120) is greater than an area of the second end portion (single-layer end portion 220).

### [Appendix 5]

The secondary battery Ba according to any one of Appendices 1 to 4, in which the first end portion (clad end portion 120) and the second end portion (single-layer end portion 220) include a joint mark (positive electrode joint mark Pw and negative electrode joint mark Nw) that is recessed from one side toward the other side in a stacking direction.

### [Appendix 6]

The secondary battery Ba according to Appendix 5, in which a thickness of a metal layer 102a provided on the one side of the resin layer 100 is greater than a thickness of a metal layer 102b provided on the other side of the resin layer 100.

### [Appendix 7]

The secondary battery Ba according to Appendix 6, in which the joint mark (positive electrode joint mark Pw and negative electrode joint mark Nw) is a weld mark.

### [Appendix 8]

The secondary battery Ba according to any one of Appendices 1 to 7, in which the secondary battery Ba includes a plurality of the first electrode sheets (clad electrodes 1) and a plurality of the second electrode sheets (single metal layer electrodes 2).

### [Appendix 9]

The secondary battery Ba according to Appendix 8, in which one first end portion (clad end portion 120) and one second end portion (single-layer end portion 220) are stacked alternately with each other.

### [Appendix 10]

The secondary battery Ba according to Appendix 8, in which a plurality of the second end portions (single-layer end portions 220) are stacked between a plurality of the first end portions (clad end portions 120) and a plurality of the first end portions (clad end portions 120).

### [Appendix 11]

The secondary battery Ba according to Appendix 8, in which the number of the second electrode sheets (single metal layer electrodes 2) is 1/4 or greater and 3/4 or less of the number of the first electrode sheets (clad electrodes 1).

### [Appendix 12]

The secondary battery Ba according to any one of Appendices 1 to 11, in which the pair of metal layers 102a and 102b each has a thickness of 0.3 µm or greater.

### [Appendix 13]

The secondary battery Ba according to any one of Appendices 1 to 12, in which the second current collector (single-layer current collector 20) has a thickness of 4 µm or greater.

### [Appendix 14]

The secondary battery Ba according to any one of Appendices 1 to 13, in which the pair of metal layers 102a and 102b each has a thickness of 1/30 or greater of a thickness of the second current collector (single-layer current collector 20).

### [Appendix 15]

The secondary battery Ba according to any one of Appendices 1 to 14, in which the pair of metal layers 102a and 102b each has a thickness of 1/2 or less of a thickness of the second current collector (single-layer current collector 20).

### [Appendix 16]

The secondary battery Ba according to any one of Appendices 1 to 15, in which the first electrode sheet (clad electrode 1) and the second electrode sheet (single metal layer electrode 2) are electrode sheets of a positive electrode.

### [Appendix 17]

The secondary battery Ba according to Appendix 16, in which the pair of metal layers 102a and 102b and the second current collector (single-layer current collector 20) are configured to contain aluminum.

### [Appendix 18]

The secondary battery Ba according to any one of Appendices 1 to 17, in which the first electrode sheet (clad electrode 1) and the second electrode sheet (single metal layer electrode 2) are electrode sheets of a negative electrode.

### [Appendix 19]

The secondary battery Ba according to Appendix 18, in which the pair of metal layers 102a and 102b and the second current collector (single-layer current collector 20) are configured to contain copper.

### [Appendix 20]

The secondary battery Ba according to Appendix 18, in which the first electrode sheet (clad electrode 1) and the second electrode sheet (single metal layer electrode 2) are substantially free of a negative-electrode active material.

### Reference Signs List

Ba secondary battery
1 clad electrode
1n clad negative electrode
1p clad positive electrode
2 single metal layer electrode
2n single metal layer negative electrode
2p single metal layer positive electrode
10 clad current collector
10n clad negative electrode current collector
10p clad positive electrode current collector
12a, 12b active material layer
12na, 12nb negative-electrode active material layer
12pa, 12pb positive-electrode active material layer
20 single-layer current collector
20n single-layer negative electrode current collector
20p single-layer positive electrode current collector
22a, 22b active material layer
22na, 22nb negative-electrode active material layer
22pa, 22pb positive-electrode active material layer
30 separator
100 resin layer
102a, 102b metal layer
102na, 102nb negative electrode metal layer
102pa, 102pb positive electrode metal layer
120 clad end portion
120n clad negative electrode end portion
120p clad positive electrode end portion
220 single-layer end portion
220n single-layer negative electrode end portion
220p single-layer positive electrode end portion
Am active material stacking region
Ne negative electrode end portion
Nw negative electrode joint mark
Pe positive electrode end portion
Pw positive electrode joint mark
w joint mark

## Claims

1. A secondary battery comprising: a first electrode sheet; and a second electrode sheet having a same polarity as the first electrode sheet,
wherein the first electrode sheet includes a first current collector that includes a resin layer and a pair of metal layers respectively provided on both surfaces of the resin layer and has a first end portion where the pair of metal layers are exposed,
the second electrode sheet includes a second current collector that is configured to contain a metal, does not include the resin layer, and has a second end portion where the metal is exposed, and
the first end portion and the second end portion are stacked and bonded to each other.

2. The secondary battery according to Claim 1, wherein the first electrode sheet includes a first active material layer containing an active material, the first active material layer is provided on at least one surface of the first current collector,
the second electrode sheet includes a second active material layer containing the active material, and the second active material layer is provided on at least one surface of the second current collector.

3. The secondary battery according to Claim 2, wherein a basis weight of the first active material layer of the first electrode sheet is less than a basis weight of the second active material layer of the second electrode sheet.

4. The secondary battery according to Claim 1, wherein an area of the first end portion is greater than an area of the second end portion.

5. The secondary battery according to Claim 1, wherein the first end portion and the second end portion include a joint mark that is recessed from one side toward the other side in a stacking direction.

6. The secondary battery according to Claim 5, wherein a thickness of a metal layer provided on the one side of the resin layer is greater than a thickness of a metal layer provided on the other side of the resin layer.

7. The secondary battery according to Claim 6, wherein the joint mark is a weld mark.

8. The secondary battery according to Claim 1, wherein the secondary battery includes a plurality of the first electrode sheets and a plurality of the second electrode sheets.

9. The secondary battery according to Claim 8, wherein one first end portion and one second end portion are stacked alternately with each other.

10. The secondary battery according to Claim 8, wherein a plurality of the second end portions are stacked between a plurality of the first end portions and a plurality of the first end portions.

11. The secondary battery according to Claim 8, wherein the number of the second electrode sheets is 1/4 or greater and 3/4 or less of the number of the first electrode sheets.

12. The secondary battery according to Claim 1, wherein the pair of metal layers each has a thickness of 0.3 µm or greater.

13. The secondary battery according to Claim 1, wherein the second current collector has a thickness of 4 µm or greater.

14. The secondary battery according to Claim 1, wherein the pair of metal layers each has a thickness of 1/30 or greater of a thickness of the second current collector.

15. The secondary battery according to Claim 1, wherein the pair of metal layers each has a thickness of 1/2 or less of a thickness of the second current collector.

16. The secondary battery according to Claim 1, wherein the first electrode sheet and the second electrode sheet are electrode sheets of a positive electrode.

17. The secondary battery according to Claim 16, wherein the pair of metal layers and the second current collector are configured to contain aluminum.

18. The secondary battery according to Claim 1, wherein the first electrode sheet and the second electrode sheet are electrode sheets of a negative electrode.

19. The secondary battery according to Claim 18, wherein the pair of metal layers and the second current collector are configured to contain copper.

20. The secondary battery according to Claim 18, wherein the first electrode sheet and the second electrode sheet are substantially free of a negative-electrode active material.
